# EUROPÄISCHE PATENTSCHRIFT

(11) **EP 3 504 467 B1**
(45) Veröffentlichungstag und Bekanntmachung des Hinweises auf die Patenterteilung: **07.10.2020**
(21) Anmeldenummer: 17751740.6
(22) Anmeldetag: 10.08.2017
(51) Int. Cl.: F16K 5/06

(54) **DICHTUNGSANORDNUNG UND VENTILANORDNUNG**
SEAL ASSEMBLY AND VALVE ASSEMBLY
ENSEMBLE D'ÉTANCHÉITÉ ET ENSEMBLE SOUPAPE

(30) Priorität: 25.08.2016 DE 102016216051
(43) Veröffentlichungstag der Anmeldung: 03.07.2019
(73) Patentinhaber: Volkswagen Aktiengesellschaft, 38440 Wolfsburg (DE)
(72) Erfinder: FRIES, Holger, 38640 Goslar (DE); LÜDERS, Ralf, 31224 Peine (DE); BILBAL, Ugur Goekhan, 31139 Hildesheim (DE); KOEHLER, Axel-Oliver, 38116 Braunschweig (DE)
(86) Internationale Anmeldenummer: PCT/EP2017/070384
(87) Internationale Veröffentlichungsnummer: WO 2018/036841

(56) Entgegenhaltungen:
- EP-A1- 0 483 611
- DE-A1-102015 216 498
- US-A- 3 114 386
- US-A1- 2011 266 482
- US-A1- 2011 266 484

## Beschreibung

Die Erfindung betrifft eine Dichtungsanordung zum Abdichten eines Übergangs zwischen einem Fluidzuführkanal und einem Ventilglied, gemäß dem Oberbegriff des Patentanspruchs 1. Weiter betrifft die Erfindung eine Ventilanordnung mit einer solchen Dichtungsanordnung.

Herkömmliche Brennkraftmaschinen weisen regelmäßig einen oder mehrere Kühlmittelkreisläufe zur Kühlung auf, wobei das Kühlmittel bspw. durch einen ersten Kühlmittelweg mit einem Wärmetauscher oder durch einen zweiten Kühlmittelweg ohne Wärmetauscher geleitet werden kann. Zur Regelung der durch die verschiedenen Kühlmittelwege zu leitenden Kühlmittelmengen sind regelmäßig Ventilanordnungen wie etwa Drehschieberventile vorgesehen. Ventilanordnungen weisen ein verstellbares Ventilglied wie etwa einen Drehschieber auf, das in einer ersten Ventilstellung einen Durchgang zwischen dem Fluidzuführkanal und einem ersten Fluidableitkanal freigibt und in einer zweiten Ventilstellung einen Durchgang zwischen dem Fluidzuführkanal und einem zweiten Fluidableitkanal freigibt. Auch Zwischenstellungen des Ventilglieds sind möglich, bspw. um eine optimale Kühlmitteltemperatur einstellen zu können. In den jeweiligen Ventilstellungen muss dafür gesorgt werden, dass das dem Ventilglied zugewandte Ende des Fluidzuführkanals dichtend an dem Ventilglied anliegt, so dass ein Vordringen des Kühlmittels zu nicht dafür vorgesehenen Bereichen der Ventilanordnung wie etwa elektrischen Bauteilen und deren Beschädigung verhindert wird. Ferner soll in einer geschlossenen Ventilstellung kein Kühlmittel von dem Fluidzuführkanal an dem Ventilglied vorbei weiter in die Ventilanordnung vordringen können und umgekehrt. Zu diesem Zweck ist regelmäßig eine zwischen dem beweglichen Ventilglied und dem Ende des Fluidzuführkanals wirkende Dichtungsanordnung vorgesehen.

Eine herkömmliche Dichtungsanordnung weist eine metallische Führungshülse, ein Vorspannelement, einen Elastomer-Dichtring und eine Dichthülse aus Kunststoff auf. Dabei sind drei prinzipiell mögliche Leckagewege vorhanden, auf denen ein Fluid auf dem Weg von dem Fluidzuführkanal zu dem Ventilglied entweichen kann. Der erste mögliche Leckageweg besteht zwischen dem Ventilglied und der Dichthülse. Weiter besteht der zweite mögliche Leckageweg zwischen der Führungshülse und der Dichthülse. Der dritte mögliche Leckageweg besteht zwischen der Führungshülse und dem Fluidzuführkanal.

Die Führungshülse und die Dichthülse überlappen einander zumindest abschnittsweise und sind relativ zueinander in einer axialen Richtung beweglich. Dabei drückt das Vorspannelement die Führungshülse und die Dichthülse auseinander. Mittels des Vorspannelements wird die Dichthülse gegen das Ventilglied gedrückt, um den ersten möglichen Leckageweg abzudichten. Weiter wird mittels des Vorspannelements die Führungshülse gegen den Fluidzuführkanal gedrückt, um den dritten möglichen Leckageweg abzudichten.

Der Elastomer-Dichtring dichtet den zweiten möglichen Leckageweg zwischen der Führungshülse und der Dichthülse ab. Aufgrund der Verwendung des Elastomer-Dichtrings ergibt sich eine komplizierte Montage der Dichtungsanordnung.

Die DE 10 2015 216 498 A1 beschreibt eine Dichtungsanordnung bei der auf einen Elastomer-Dichtring verzichtet wird. Allerdings ist es bei der dort beschriebenen Dichtungsanordnung vorteilhaft, wenn sowohl die Führungshülse als auch die Dichthülse das gleiche Material aufweisen, damit sich bei einer Temperaturänderung der Dichtungsanordnung die Führungshülse und die Dichthülse gleichförmig ändern und so Spaltmaße beziehungsweise Dichtwirkung konstant bleibt.

Die EP 0 483 611 A1 offenbart eine Dichtungsanordnung für einen Kugelhahn. Die Dichtungsanordnung umfasst ein mit der Kugel in dichtendem Eingriff stehendes Kugeldichtungselement, das durch ein Sekundärdichtungselement gegenüber dem Gehäuse des Kugelhahnes abgedichtet ist. Auf das Sekundärdichtungselement wirkt die Kraft einer Vorspanneinrichtung, bestehend aus einem auf dem Kugeldichtungselement angeordneten Kolbenelement, welches einen vorzugsweise durch eine Metallbalganordnung abgedichteten Druckraum definiert, in den das abzudichtende Medium über eine Passage eingeführt werden kann. Das bevorzugte Material für das Sekundärdichtungselement ist verpresster Reingraphit.

Die US 2011/266482 A1, die US 2011/266484 A1 und die US 3 114 386 A beschreiben eine Dichtungsanordnung mit einem Kugelventil, bei welchem die Dichtungen als separate Bauteile ausgebildet sind.

Der Erfindung liegt die Aufgabe zugrunde, eine Dichtungsanordnung bereitzustellen, bei welcher die Montage der Dichtungsanordnung vereinfacht wird und bei welcher für die Führungshülse und die Dichthülse unterschiedliche Materialien verwendet werden können. Ebenso ist es eine Aufgabe der Erfindung, eine Ventilanordnung mit einer entsprechenden Dichtungsanordnung bereitzustellen.

Diese Aufgabe wird erfindungsgemäß durch eine Dichtungsanordnung der o.g. Art mit den in Anspruch 1 gekennzeichneten Merkmalen gelöst. Vorteilhafte Ausgestaltungen der Erfindung sind in den weiteren Ansprüchen beschrieben. Eine Ventilanordnung mit einer solchen Dichtungsanordnung wird in Anspruch 10 beschrieben.

Demgemäß wird eine Dichtungsanordnung, insbesondere zum Abdichten eines Übergangs zwischen einem Fluidzuführkanal und einem Ventilglied, bereitgestellt. Die Dichtungsanordnung weist eine Führungshülse zum Abdichten gegenüber dem Fluidzuführkanal, eine Dichthülse zum Abdichten gegenüber dem Ventilglied, welche in einer axialen Richtung relativ zu der Führungshülse verschiebbar ist, und ein Vorspannelement zum Auseinanderdrücken der Führungshülse und der Dichthülse in der axialen Richtung auf. Dabei weist die Führungshülse ein Führungsrohr aus einem ersten Material und eine Dichtung aus einem zweiten Material auf. Weiter ist die Dichtung eingerichtet, das Führungsrohr gegen die Dichthülse und/oder gegen den Fluidzuführkanal abzudichten. Dabei ist die Dichtung fest mit dem Führungsrohr verbunden.

Dadurch, dass die Dichtung fest mit dem Führungsrohr verbunden ist, kann auf einen separaten Dichtring, wie etwa einen O-Ring, verzichtet werden. Demnach ist die Führungshülse aufweisend das Führungsrohr und die Dichtung als ein einzelnes Bauteil ausgebildet. Dies hat den Vorteil, dass sich der Montageaufwand und die Fehleranfälligkeit für die Montage der Dichtungsanordnung verringert.

Weiter weist das Führungsrohr ein erstes Material und die Dichtung ein zweites Material auf. Demnach kann das Führungsrohr aus einem Material ausgebildet werden, welches dem Führungsrohr eine hohe Stabilität verleiht. Andererseits kann die Dichtung aus einem Material ausgebildet werden, mit welchem eine gute Abdichtung gegenüber der Dichthülse und/oder dem Fluidzuführkanal erreicht werden kann.

Aufgrund des Materials der Dichtung und/oder der Position der Dichtung am Führungsrohr, ist die Dichtung eingerichtet, das Führungsrohr gegen die Dichthülse und/oder gegen den Fluidzuführkanal abzudichten. Ist zumindest ein Teil der Dichtung an einem Abschnitt des Führungsrohrs befestigt, welcher in Richtung des Fluidzuführkanals weist, dann kann die Dichtung einen Spalt zwischen Führungsrohr und Fluidzuführkanal abdichten. Ist zumindest ein Teil der Dichtung an einem Abschnitt des Führungsrohrs befestigt, welcher in Richtung der Dichthülse weist, dann kann die Dichtung einen Spalt zwischen Führungsrohr und Dichthülse abdichten.

Das Führungsrohr der Führungshülse sowie die Dichthülse können zumindest teilweise eine zylindrische, insbesondere kreiszylindrische Geometrie aufweisen. Dabei können das Führungsrohr und die Dichthülse derart angeordnet werden, dass sie die gleiche Achse aufweisen. Mit der axialen Richtung ist vorliegend die Richtung entlang dieser Achse gemeint. Weiter überlappen sich Führungsrohr und Führungshülse zumindest teilweise in der axialen Richtung. Zudem sind Führungsrohr und Führungshülse relativ zueinander in der axialen Richtung verschiebbar.

Das Vorspannelement ist eingerichtet, einen Druck auf das Führungsrohr der Führungshülse in der axialen Richtung auszuüben, so dass die Führungshülse auf den Fluidzuführkanal gedrückt wird, um die Führungshülse gegen den Fluidzuführkanal abzudichten. Weiter ist das Vorspannelement eingerichtet, einen Druck auf die Dichthülse in der axialen Richtung auszuüben, so dass die Dichthülse auf das Ventilglied gedrückt wird, um die Dichthülse gegen das Ventilglied abzudichten.

Weiter weist das Vorspannelement vorzugsweise ein Federelement, wie etwa eine Stahlfeder, eine Ringfeder, eine Schraubenfeder, eine Wellringfeder, ein elastisches Balgelement, ein Spannelement aus einem elastischen Material oder dergleichen auf. Bei einer bevorzugten Ausführungsform ist das Vorspannelement in Form einer Wellringfeder, insbesondere aus Edelstahl, ausgebildet.

Gemäß einer Ausführungsform der Dichtungsanordnung ist die Führungshülse in einem Zwei-Komponenten-Spritzgussverfahren hergestellt. Dabei ist die Dichtung an das Führungsrohr angespritzt. Vorteilhafterweise kann die Führungshülse so sehr günstig hergestellt werden. Dabei wird zunächst das Führungsrohr der Führungshülse in einem Spritzgussverfahren hergestellt. Danach wird die Dichtung an das Führungsrohr angespritzt. Zwischen dem Material des Führungsrohrs und dem Material der Dichtung kann es zu einer chemischen Verbindung kommen. Dadurch ist die Dichtung sehr fest mit dem Führungsrohr verbunden.

Gemäß einer weiteren Ausführungsform der Dichtungsanordnung weist die Dichtung eine Radialdichtung zum Abdichten des Führungsrohrs gegen die Dichthülse auf. Die Radialdichtung ist an einer Seitenwand des Führungsrohrs befestigt. Da sich Führungsrohr und Dichthülse überlappen, kann die Radialdichtung das Führungsrohr gegen die Dichthülse abdichten.

Gemäß einer weiteren Ausführungsform der Dichtungsanordnung weist die Radialdichtung eine Dichtlippe auf, welche unter einem Winkel von 10° bis 85°, bevorzugt von 20° bis 75°, von einer Seitenwand des Führungsrohrs absteht. Vorzugsweise ist die Dichtlippe so ausgebildet, dass sie durch die Druckverhältnisse zwischen einem Innenbereich und einem Außenbereich der Dichtungsanordnung gegen die Dichthülse gedrückt wird. Auf diese Weise lässt sich eine optimale Abdichtung des Führungsrohrs gegen die Dichthülse erreichen.

Gemäß einer weiteren Ausführungsform der Dichtungsanordnung weist die Radialdichtung zwei Dichtlippen auf, welche jeweils unter einem Winkel von 10° bis 85°, bevorzugt von 20° bis 75°, von derselben Seitenwand des Führungsrohrs in unterschiedliche Richtungen abstehen. Vorteilhafterweise ist die Radialdichtung dann auch bei sich ändernden Druckverhältnissen zwischen einem Innenbereich und einem Außenbereich der Dichtungsanordnung zum Abdichten geeignet. Die Radialdichtung ist dann so ausgebildet, dass immer eine Dichtlippe gegen die Dichthülse gedrückt wird, um das Führungsrohr gegen die Dichthülse abzudichten.

Gemäß einer weiteren Ausführungsform der Dichtungsanordnung weist die Dichthülse eine Ausnehmung auf. Weiter greift die Radialdichtung in die Ausnehmung ein, um ein Auseinanderfallen der Dichtungsanordnung zu verhindern. Vorteilhafterweise wird die Montage einer Ventilanordnung erleichtert, wenn die Dichtungsanordnung nicht auseinanderfallen kann. Die Ausnehmung kann beispielsweise als Ringnut ausgebildet werden, welche in einer Seitenwand der Dichthülse in Umfangsrichtung der Dichthülse senkrecht zu der axialen Richtung verläuft.

Gemäß einer weiteren Ausführungsform der Dichtungsanordnung weist das Führungsrohr an einem Ende, welches in Richtung des Fluidzuführkanals weist, einen Bund auf. Weiter weist die Dichtung eine Axialdichtung zum Abdichten des Bunds gegen den Fluidzuführkanal auf.

Dadurch, dass die Axialdichtung fest mit dem Bund des Führungsrohrs verbunden ist, kann die Axialdichtung, wenn der Bund gegen den Fluidzuführkanal gedrückt wird, den Bund gegen den Fluidzuführkanal abdichten. Dadurch besteht zwischen dem Bund und dem Fluidzuführkanal keine Gefahr einer Leckage.

Das Zwei-Komponenten-Spritzgussverfahren erlaubt das gleichzeitige Anbringen sowohl der Radialdichtung als auch der Axialdichtung. Insofern können in einem Arbeitsschritt beide Dichtungsabschnitte an das Führungsrohr angespritzt werden. Dies führt zu einer Führungshülse, welche kostengünstig hergestellt werden kann und gleichzeitig gegen die weiteren Bauteile der Dichtungsanordnung gut abgedichtet werden kann.

Gemäß einer weiteren Ausführungsform der Dichtungsanordnung verläuft das Führungsrohr der Führungshülse in der axialen Richtung teilweise innerhalb der Dichthülse. Alternativ verläuft die Dichthülse in der axialen Richtung teilweise innerhalb des Führungsrohrs der Führungshülse.

Das Führungsrohr kann teilweise innerhalb der Dichthülse verlaufen. In diesem Fall ist die Radialdichtung auf einer äußeren Seitenwand des Führungsrohrs angebracht, insbesondere angespritzt. Dabei dichtet die Radialdichtung die äußere Seitenwand des Führungsrohrs gegen eine innere Seitenwand der Dichthülse ab. Alternativ kann die Dichthülse auch teilweise innerhalb des Führungsrohrs verlaufen. In diesem Fall ist die Radialdichtung auf einer inneren Seitenwand des Führungsrohrs angebracht, insbesondere angespritzt. Dabei dichtet die Radialdichtung die innere Seitenwand des Führungsrohrs gegen eine äußere Seitenwand der Dichthülse ab.

Gemäß einer weiteren Ausführungsform der Dichtungsanordnung weist das erste Material einen Kunststoff, insbesondere einen kühlmittelbeständigen Thermoplast, und/oder das zweite Material ein Elastomer, insbesondere ein kühlmittelbeständiges Elastomer, auf.

Vorteilhafterweise kann das erste Material ein hartes Material sein. Dieses verleiht dem Führungsrohr die nötige Stabilität. Weiter kann das zweite Material ein weiches Material sein. Dieses ist zum Abdichten der Bauteile geeignet.

Weiter wird eine Ventilanordnung mit einem Fluidzuführkanal, einem Ventilglied und einer Dichtungsanordnung, wie beschrieben, bereitgestellt.

Die für die vorgeschlagene Dichtungsanordnung beschriebenen Ausführungsformen und Merkmale gelten für die vorgeschlagene Ventilanordnung entsprechend und umgekehrt.

Weitere mögliche Implementierungen der Erfindung umfassen auch nicht explizit genannte Kombinationen von zuvor oder im Folgenden beschriebenen Merkmalen. Dabei wird der Fachmann auch Einzelaspekte als Verbesserungen oder Ergänzungen zu der jeweiligen Grundform der Erfindung hinzufügen.

Die Erfindung wird im Folgenden anhand der Zeichnungen näher erläutert. Diese zeigen in
- Fig. 1: eine perspektivische Ansicht einer Ventilanordnung,
- Fig. 2: eine schematische Schnittansicht einer Ventilanordnung mit einer Dichtungsanordnung gemäß einer Ausführungsform,
- Fig. 3: eine schematische Schnittansicht einer Ventilanordnung mit einer Dichtungsanordnung gemäß einer weiteren Ausführungsform, und
- Fig. 4: eine schematische Schnittansicht einer Ventilanordnung mit einer Dichtungsanordnung gemäß einer weiteren Ausführungsform.

In den Figuren sind gleiche oder funktionsgleiche Elemente mit denselben Bezugszeichen versehen worden. Ferner sollte beachtet werden, dass die Darstellungen in den Figuren nicht notwendigerweise maßstabsgerecht sind.

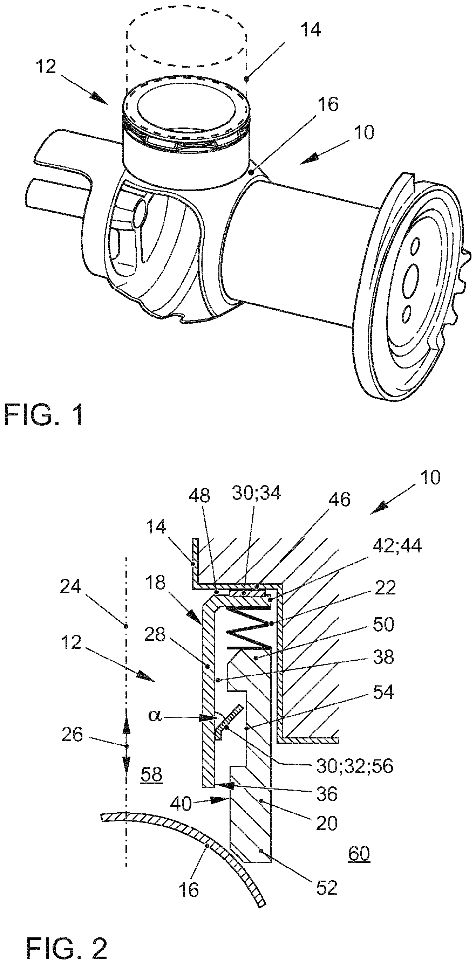

Fig. 1 zeigt eine perspektivische Ansicht einer Ventilanordnung 10. Die Ventilanordnung 10 weist eine Dichtungsanordnung 12, einen Fluidzuführkanal 14 und ein Ventilglied 16 auf. Dabei dient die Dichtungsanordnung 12 zum Abdichten eines Übergangs zwischen dem Fluidzuführkanal 14 und dem Ventilglied 16. Der Fluidzuführkanal 14 ist mittels gestrichelter Linien dargestellt. Das Ventilglied 16 ist verstellbar und kann einen Drehschieber aufweisen, wobei der Fluidstrom bei unterschiedlichen Stellungen des Ventilglieds 16 entweder gestoppt oder in unterschiedliche Richtungen geleitet werden kann. Bei dem Fluidstrom kann es sich beispielsweise um einen Kühlmittelstrom einer Brennkraftmaschine handeln.

Fig. 2 zeigt eine schematische Schnittansicht des rechten Teils einer Ventilanordnung 10 mit einer Dichtungsanordnung 12, einem Fluidzuführkanal 14 und einem Ventilglied 16. Die Dichtungsanordnung 12 weist eine Führungshülse 18, eine Dichthülse 20 und ein Vorspannelement 22 auf. Die Führungshülse 18, die Dichthülse 20 und das Vorspannelement 22 können symmetrisch, insbesondere rotationssymmetrisch um die Achse 24 angeordnet sein. Dabei erstrecken sich die Führungshülse 18, die Dichthülse 20 und das Vorspannelement 22 in axialer Richtung 26.

Die Führungshülse 18 weist ein Führungsrohr 28 und eine Dichtung 30 auf. Das Führungsrohr 28 ist teilweise innerhalb der Dichthülse 20 angeordnet. Das Führungsrohr 28 und die Dichthülse 20 können eine zylindrische, insbesondere kreiszylindrische, Form aufweisen. Weiter sind das Führungsrohr 28 und die Dichthülse 20 relativ zueinander in der axialen Richtung 26 beweglich.

Das Führungsrohr 28 weist ein erstes Material und die Dichtung 30 ein zweites Material auf. Dabei unterscheiden sich das erste und das zweite Material. Das erste Material wird gewählt, um dem Führungsrohr 28 eine gewisse Stabilität zu verleihen. Dagegen wird das zweite Material gewählt, damit die Dichtung 30 das Führungsrohr 28 gegen den Fluidzuführkanal 14 und/oder das Führungsrohr 28 gegen die Dichthülse 20 abdichten kann. Dabei ist die Dichtung 30 fest mit dem Führungsrohr 28 verbunden.

Wie in der Fig. 2 gezeigt, kann die Dichtung 30 eine Radialdichtung 32 und eine Axialdichtung 34 aufweisen. Dabei ist die Radialdichtung 32 auf einer äußeren Seitenwand 36 des Führungsrohrs 28 befestigt, um einen Spalt 38 zwischen der äußeren Seitenwand 36 des Führungsrohrs 28 und der inneren Seitenwand 40 der Dichthülse 20 abzudichten.

Das Führungsrohr 28 kann an einem Ende 42, welches in Richtung des Fluidzuführkanals 14 weist, einen Bund 44 aufweisen. Der Bund 44 ist ein bezogen auf die Achse 24 radial nach außen vorstehender Abschnitt des Führungsrohrs 28. Zwischen dem Bund 44 und einem Absatz 46 des Fluidzuführkanals 14 befindet sich ein Spalt 48. Die Axialdichtung 34 ist an dem Bund 44 befestigt, um den Spalt 48 zwischen dem Bund 44 und dem Absatz 46 des Fluidzuführkanals 14 abzudichten.

Das Vorspannelement 22 ist zwischen dem Bund 44 und einem ersten Ende 50 der Dichthülse 20 angeordnet. Aufgrund der Vorspannung des Vorspannelements 22 werden das Führungsrohr 28 und die Dichthülse 20 in der axialen Richtung 26 auseinandergedrückt. Dadurch wird ein zweites Ende 52 der Dichthülse 20 auf das Ventilglied 16 gedrückt, wodurch die Dichthülse 20 gegen das Ventilglied 16 abgedichtet wird. Weiter wird dadurch der Bund 44 mit der Axialdichtung 34 auf den Absatz 46 des Fluidzuführkanals 14 gedrückt, wodurch die Führungshülse 18 aufweisend das Führungsrohr 28 und die Axialdichtung 34 gegen den Fluidzuführkanal 14 abgedichtet wird. Bei dem Vorspannelement 22 kann es sich insbesondere um eine Wellringfeder handeln.

Die Führungshülse 18 der Dichtungsanordnung 12 kann in einem Zwei-Komponenten-Spritzgussverfahren hergestellt werden. Dazu wird in einem ersten Schritt das Führungsrohr 28 in einem Spritzgussverfahren gefertigt. In einem zweiten Schritt wird die Dichtung 30 an dem Führungsrohr 28 befestigt. Dabei können die Radialdichtung 32 und die Axialdichtung 34 in einem Arbeitsschritt an das Führungsrohr 28 angebracht werden. Insbesondere wird die Dichtung 30 an das Führungsrohr 28 angespritzt.

Das Führungsrohr 28 kann einen Kunststoff aufweisen oder aus einem Kunststoff gefertigt werden. Dabei kann es sich bei dem Kunststoff insbesondere um einen kühlmittelbeständigen Thermoplast handeln. Weiter kann die Dichtung 30 ein Elastomer aufweisen oder aus einem Elastomer gefertigt werden. Dabei kann es sich bei dem Elastomer insbesondere um ein kühlmittelbeständiges Elastomer handeln.

Die Dichthülse 20 kann eine Ausnehmung 54 aufweisen. In Fig. 2 befindet sich die Ausnehmung 54 in der inneren Seitenwand 40 der Dichthülse 20. Die Ausnehmung 54 befindet sich damit in der dem Führungsrohr 28 zugewandten Seitenwand der Dichthülse 20. Weiter kann die Radialdichtung 32 in die Ausnehmung 54 eingreifen. Damit lässt sich ein Auseinanderfallen der Dichtungsanordnung 12 vermeiden.

Wie in Fig. 2 weiter zu sehen ist, kann die Radialdichtung 32 eine Dichtlippe 56 aufweisen. Dabei ist die Dichtlippe 56 der Teil der Radialdichtung 32, welcher von der äußeren Seitenwand 36 des Führungsrohrs 28 absteht. Der Winkel α zwischen Führungsrohr 28 und Dichtlippe 56 kann im Bereich zwischen 10° und 85° und bevorzugt im Bereich zwischen 20° und 75° liegen.

Bei der in der Fig. 2 gezeigten Ventilanordnung 10 ist der Druck in einem Innenbereich 58 der Dichtungsanordnung 12 kleiner als der Druck in einem Außenbereich 60 der Dichtungsanordnung 12. Deswegen wird die Dichtlippe 56 gegen die inneren Seitenwand 40 der Dichthülse 20 gedrückt. Damit ist der Spalt 38 abgedichtet.

Zusätzlich wirkt der größere Druck im Außenbereich 60 auf das Führungsrohr 28 und die Dichthülse 20 in der gleichen Richtung wie das Vorspannelement 22.

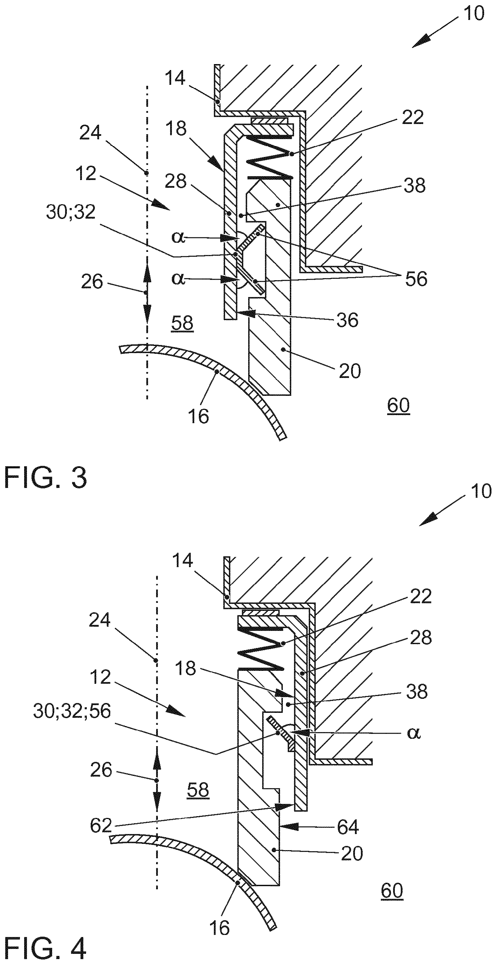

Fig. 3 zeigt eine schematische Schnittansicht des rechten Teils einer Ventilanordnung 10 mit einer Dichtungsanordnung 12. Im Gegensatz zu der in der Fig. 2 dargestellten Dichtungsanordnung 12 weist die in der Fig. 3 dargestellte Dichtungsanordnung 12 eine Radialdichtung 32 mit zwei Dichtlippen 56 auf. Dabei kann der jeweilige Winkel α zwischen dem Führungsrohr 28 und der jeweiligen Dichtlippe 56 im Bereich zwischen 10° und 85° und bevorzugt im Bereich zwischen 20° und 75° liegen. Weiter stehen die zwei Dichtlippen 56 in unterschiedlichen Richtungen von der äußeren Seitenwand 36 des Führungsrohrs 28 ab.

Aufgrund der Verwendung von zwei Dichtlippen 56 kommt es nicht darauf an, ob der Druck in dem Innenbereich 58 der Dichtungsanordnung 12 oder der Druck in dem Außenbereich 60 der Dichtungsanordnung 12 größer ist. Die Radialdichtung 32 kann in jedem der beiden Fälle den Spalt 38 zuverlässig abdichten.

Fig. 4 zeigt eine schematische Schnittansicht des rechten Teils einer Ventilanordnung 10 mit einer Dichtungsanordnung 12. Im Gegensatz zu der in der Fig. 2 dargestellten Dichtungsanordnung 12 verläuft bei der in der Fig. 4 dargestellten Dichtungsanordnung 12 die Dichthülse 20 in der axialen Richtung 26 zumindest teilweise innerhalb des Führungsrohrs 28 der Führungshülse 18. Deswegen ist die Radialdichtung 32 auf einer inneren Seitenwand 62 des Führungsrohrs 28 angebracht.

Bei der in der Fig. 4 gezeigten Ventilanordnung 10 ist der Druck in dem Innenbereich 58 der Dichtungsanordnung 12 größer als der Druck in dem Außenbereich 60 der Dichtungsanordnung 12. Deswegen wird die Dichtlippe 56 gegen die äußere Seitenwand 64 der Dichthülse 20 gedrückt. Damit ist der Spalt 38 abgedichtet. Zusätzlich wirkt der größere Druck im Innenbereich 58 auf das Führungsrohr 28 und die Dichthülse 20 in der gleichen Richtung wie das Vorspannelement 22.

### Bezugszeichenliste

- 10: Ventilanordnung
- 12: Dichtungsanordnung
- 14: Fluidzuführkanal
- 16: Ventilglied
- 18: Führungshülse
- 20: Dichthülse
- 22: Vorspannelement
- 24: Achse
- 26: axiale Richtung
- 28: Führungsrohr
- 30: Dichtung
- 32: Radialdichtung
- 34: Axialdichtung
- 36: äußere Seitenwand des Führungsrohrs
- 38: Spalt
- 40: innere Seitenwand der Dichthülse
- 42: Ende des Führungsrohrs
- 44: Bund
- 46: Absatz des Fluidzuführkanals
- 48: Spalt
- 50: erstes Ende der Dichthülse
- 52: zweites Ende der Dichthülse
- 54: Ausnehmung
- 56: Dichtlippe
- 58: Innenbereich der Dichtungsanordnung
- 60: Außenbereich der Dichtungsanordnung
- 62: innere Seitenwand des Führungsrohrs
- 64: äußere Seitenwand der Dichthülse

## Patentansprüche

1. Dichtungsanordnung (12), zum Abdichten eines Übergangs zwischen einem Fluidzuführkanal (14) und einem Ventilglied (16), aufweisend
- eine Führungshülse (18) zum Abdichten gegenüber dem Fluidzuführkanal (14),
- eine Dichthülse (20) zum Abdichten gegenüber dem Ventilglied (16), welche in einer axialen Richtung (26) relativ zu der Führungshülse (18) verschiebbar ist, und
- ein Vorspannelement (22) zum Auseinanderdrücken der Führungshülse (18) und der Dichthülse (20) in der axialen Richtung (26),
wobei die Führungshülse (18) ein Führungsrohr (28) aus einem ersten Material und eine Dichtung (30) aus einem zweiten Material aufweist, und wobei die Dichtung (30) eingerichtet ist, das Führungsrohr (28) gegen die Dichthülse (20) und/oder gegen den Fluidzuführkanal (14) abzudichten,
**dadurch gekennzeichnet, dass** die Dichtung (30) fest mit dem Führungsrohr (28) verbunden ist, derart, dass die Führungshülse, aufweisend das Führungsrohr und die Dichtung, als ein einzelnes Bauteil ausgebildet ist.

2. Dichtungsanordnung nach Anspruch 1, **dadurch gekennzeichnet, dass** die Führungshülse (18) in einem Zwei-Komponenten-Spritzgussverfahren hergestellt ist, wobei die Dichtung (30) an das Führungsrohr (28) angespritzt ist.

3. Dichtungsanordnung nach Anspruch 1 oder 2, **dadurch gekennzeichnet, dass** die Dichtung (30) eine Radialdichtung (32) zum Abdichten des Führungsrohrs (28) gegen die Dichthülse (20) aufweist.

4. Dichtungsanordnung nach Anspruch 3, **dadurch gekennzeichnet, dass** die Radialdichtung (32) eine Dichtlippe (56) aufweist, welche unter einem Winkel (a) von 10° bis 85°, bevorzugt von 20° bis 75°, von einer Seitenwand (36, 62) des Führungsrohrs (28) absteht.

5. Dichtungsanordnung nach Anspruch 3, **dadurch gekennzeichnet, dass** die Radialdichtung (32) zwei Dichtlippen (56) aufweist, welche jeweils unter einem Winkel (a) von 10° bis 85°, bevorzugt von 20° bis 75°, von derselben Seitenwand (36, 62) des Führungsrohrs (28) in unterschiedliche Richtungen abstehen.

6. Dichtungsanordnung nach einem der Ansprüche 3 bis 5, **dadurch gekennzeichnet, dass** die Dichthülse (20) eine Ausnehmung (54) aufweist und die Radialdichtung (32) in die Ausnehmung (54) eingreift, um ein Auseinanderfallen der Dichtungsanordnung (12) zu verhindern.

7. Dichtungsanordnung nach einem der vorhergehenden Ansprüche, **dadurch gekennzeichnet, dass** das Führungsrohr (28) an einem Ende (42), welches in Richtung des Fluidzuführkanals (14) weist, einen Bund (44) und die Dichtung (30) eine Axialdichtung (34) zum Abdichten des Bunds (44) gegen den Fluidzuführkanal (14) aufweist.

8. Dichtungsanordnung nach einem der vorhergehenden Ansprüche, **dadurch gekennzeichnet, dass** das Führungsrohr (28) der Führungshülse (18) in der axialen Richtung (26) teilweise innerhalb der Dichthülse (20) verläuft oder dass die Dichthülse (20) in der axialen Richtung (26) teilweise innerhalb des Führungsrohrs (28) der Führungshülse (18) verläuft.

9. Dichtungsanordnung nach einem der vorhergehenden Ansprüche, **dadurch gekennzeichnet, dass** das erste Material einen Kunststoff, insbesondere einen kühlmittelbeständigen Thermoplast, und/oder dass das zweite Material ein Elastomer, insbesondere ein kühlmittelbeständiges Elastomer, aufweist.

10. Ventilanordnung (10) mit einem Fluidzuführkanal (14), einem Ventilglied (16) und einer Dichtungsanordnung (12) nach einem der vorhergehenden Ansprüche.

## Claims

1. Seal assembly (12) for sealing a transition between a fluid supply channel (14) and a valve member (16), comprising
- a guide sleeve (18) for sealing with respect to the fluid supply channel (14),
- a sealing sleeve (20) for sealing with respect to the valve member (16), which sealing sleeve (20) is displaceable in an axial direction (26) relative to the guide sleeve (18), and
- a pretensioning element (22) for pushing apart the guide sleeve (18) and the sealing sleeve (20) in the axial direction (26),
wherein the guide sleeve (18) comprises a guide tube (28) made of a first material and a seal (30) made of a second material, and wherein the seal (30) is configured to seal the guide tube (28) against the sealing sleeve (20) and/or against the fluid supply channel (14),
**characterized in that** the seal (30) is fixedly connected to the guide tube (28) in such a way that the guide sleeve, comprising the guide tube and the seal, is formed as a single component.

2. Seal assembly according to claim 1, **characterized in that** the guide sleeve (18) is produced in a two-component injection molding process, wherein the seal (30) is overmolded onto the guide tube (28).

3. Seal assembly according to claim 1 or 2, **characterized in that** the seal (30) has a radial seal (32) for sealing the guide tube (28) against the sealing sleeve (20).

4. Seal assembly according to claim 3, **characterized in that** the radial seal (32) comprises a sealing lip (56) which protrudes from a side wall (36, 62) of the guide tube (28) at an angle (α) of 10° to 85°, preferably 20° to 75°.

5. Seal assembly according to claim 3, **characterized in that** the radial seal (32) has two sealing lips (56), each of which protrudes from the same side wall (36, 62) of the guide tube (28) in different directions at an angle (α) of 10° to 85°, preferably 20° to 75°.

6. Seal assembly according to any of claims 3 to 5, **characterized in that** the sealing sleeve (20) has a recess (54) and the radial seal (32) engages in the recess (54) in order to prevent the seal assembly (12) from falling apart.

7. Seal assembly according to any of the preceding claims, **characterized in that** the guide tube (28) has a collar (44) at one end (42) which points in the direction of the fluid supply channel (14), and the seal (30) has an axial seal (34) for sealing the collar (44) against the fluid supply channel (14).

8. Seal assembly according to any of the preceding claims, **characterized in that** the guide tube (28) of the guide sleeve (18) extends partially within the sealing sleeve (20) in the axial direction (26), or **in that** the sealing sleeve (20) extends partially within the guide tube (28) of the guide sleeve (18) in the axial direction (26).

9. Seal assembly according to any of the preceding claims, **characterized in that** the first material comprises a plastic, in particular a coolant-resistant thermoplastic, and/or **in that** the second material comprises an elastomer, in particular a coolant-resistant elastomer.

10. Valve assembly (10) having a fluid supply channel (14), a valve member (16), and a seal assembly (12) according to any of the preceding claims.

## Revendications

1. Ensemble d'étanchéité (12), servant à réaliser l'étanchéité d'une transition entre un conduit d'amenée de fluide (14) et un élément de soupape (16), comprenant :
- une douille de guidage (18) servant à réaliser l'étanchéité vis-à-vis du conduit d'amenée de fluide (14),
- une douille d'étanchéité (20) servant à réaliser l'étanchéité vis-à-vis de l'élément de soupape (16), laquelle est mobile par rapport à la douille de guidage (18) dans une direction axiale (26) et
- un élément de précontrainte (22) servant à écarter la douille de guidage (18) et la douille d'étanchéité (20) l'une de l'autre dans la direction axiale (26),
dans lequel la douille de guidage (18) comprend un tube de guidage (28) constitué d'un premier matériau et un joint d'étanchéité (30) constitué d'un deuxième matériau et dans lequel le joint d'étanchéité (30) est conçu pour réaliser l'étanchéité du tube de guidage (28) vis-à-vis de la douille d'étanchéité (20) et/ou vis-à-vis du conduit d'amenée de fluide (14),
**caractérisé en ce que** le joint d'étanchéité (30) est solidaire du tube de guidage (28), de sorte que la douille de guidage, présentant le tube de guidage et le joint d'étanchéité, soit conçue comme un élément individuel.

2. Ensemble d'étanchéité selon la revendication 1, **caractérisé en ce que** la douille de guidage (18) est fabriquée selon un procédé de moulage par injection à deux composants, dans lequel le joint d'étanchéité (30) est moulé par injection sur le tube de guidage (28).

3. Ensemble d'étanchéité selon la revendication 1 ou 2, **caractérisé en ce que** le joint d'étanchéité (30) présente un joint d'étanchéité radial (32) servant à réaliser l'étanchéité du tube de guidage (28) vis-à-vis de la douille d'étanchéité (20).

4. Ensemble d'étanchéité selon la revendication 3, **caractérisé en ce que** le joint d'étanchéité radial (32) présente une lèvre d'étanchéité (56), qui fait saillie selon un angle (α) de 10° à 85°, de préférence de 20° à 75°, d'une paroi latérale (36, 62) du tube de guidage (28).

5. Ensemble d'étanchéité selon la revendication 3, **caractérisé en ce que** le joint d'étanchéité radial (32) présente deux lèvres d'étanchéité (56), qui font respectivement saillie selon un angle (α) de 10° à 85°, de préférence de 20° à 75°, de la même paroi latérale (36, 62) du tube de guidage (28) dans des directions différentes.

6. Ensemble d'étanchéité selon l'une quelconque des revendications 3 à 5, **caractérisé en ce que** la douille d'étanchéité (20) présente une cavité (54) et le joint d'étanchéité radial (32) vient en prise dans la cavité (54), afin d'empêcher une séparation de l'ensemble d'étanchéité (12).

7. Ensemble d'étanchéité selon l'une quelconque des revendications précédentes, **caractérisé en que** le tube de guidage (28) présente sur une extrémité (42), laquelle est orientée en direction du conduit d'amenée de fluide (14), une collerette (44) et le joint d'étanchéité (30) présente un joint d'étanchéité axial (34) servant à réaliser l'étanchéité de la collerette (44) vis-à-vis du conduit d'amenée de fluide (14).

8. Ensemble d'étanchéité selon l'une quelconque des revendications précédentes, **caractérisé en ce que** le tube de guidage (28) de la douille de guidage (18) s'étend dans la direction axiale (26) partiellement à l'intérieur de la douille d'étanchéité (20) ou que la douille d'étanchéité (20) s'étend dans la direction axiale (26) partiellement à l'intérieur du tube de guidage (28) de la douille de guidage (18).

9. Ensemble d'étanchéité selon l'une quelconque des revendications précédentes, **caractérisé en ce que** le premier matériau présente un plastique, en particulier un thermoplastique résistant au liquide de refroidissement, et/ou que le deuxième matériau présente un élastomère, en particulier un élastomère résistant au liquide de refroidissement.

10. Ensemble soupape (10) comprenant un conduit d'amenée de fluide (14), un élément de soupape (16) et un ensemble d'étanchéité (12) selon l'une quelconque des revendications précédentes.
